# EUROPEAN PATENT APPLICATION

(11) **EP 2 105 756 A1**
(43) Date of publication of application: **30.09.2009**
(21) Application number: 08153230.1
(22) Date of filing: 25.03.2008
(51) Int. Cl.: G01S 1/00

(54) **A positioning device and a method of operating thereof**

(71) Applicant: Telefonaktiebolaget LM Ericsson (publ), 164 83 Stockholm (SE)
(72) Inventor: Lethbridge, Simon, Thatcham, RG19 3XW (GB)
(74) Representative: Bratt, Hanna Catharina

(57) **Abstract**

The application discloses a method of operating a positioning device using assistance data (102) from a cellular communications network to calculate the position of said device. The method comprises reducing (106) the number of the positioning satellites to be tracked between requests to calculate position to one or two satellites.

## Description

### Technical Field

The present invention relates to positioning devices, in general, and in particular to positioning devices for use in applications which do not require continuous reporting of position.

### Background

GPS devices for use in the consumer mass market are more and more popular and they exist as separate portable devices, built-in in vehicles or in mobile phones. Building GPS into a mobile phone is possible thanks to the small size of the GPS chips and their price, which has decreased over the years. There are also known solutions where GPS receivers are integrated into the same ASIC as the hardware of a mobile phone.

GPS equipment can be used in different ways and some of them include:
- navigation;
- E911 - service that allows the location of those making emergency calls;
- geotagging photographs;
- asset / child tracking;
- push advertising.

The first of these examples requires the constant reporting of the position of the device, whereas the remaining four examples require the reporting of a position of the device only when requested.

In existing solutions the GPS hardware may continue the normal tracking of visible satellites during the period of inactivity or may suspend the tracking of satellites between requests to calculate position.

In a solution described in the patent application US2007/0152878A1 an unassisted indoor GPS receiver and its operation is disclosed. This document describes tracking and reacquisition of navigational satellite signals in weak signal conditions (e.g. indoor operation) in an attempt to collect from the satellite signal ephemeris data when this needs to be updated. However, the device and operations as in the invention now to be described is neither disclosed nor suggested in this prior art document.

One of the disadvantages of these known solutions is that the continuous tracking of GPS satellites results in significant power consumption, which is a big problem in battery powered devices. Devices which do not track GPS satellites between fixes require rather long periods of time in order to start tracking and acquire signals from GPS satellites, which means a long time to the first fix. US2007/0152878A1 document does not provide a solution to these problems. The need for the reacquisition of the GPS signal is caused by external factors beyond the control of the user of the positioning device (i.e. they are caused by weak signal conditions). Once there are enough GPS satellites visible to calculate the initial position the device described in US2007/0152878A1 has to rely on the solutions discussed earlier in order to implement discontinuous reporting of position with long intervals.

### Summary

It is the object of the present invention to obviate at least some of the above disadvantages and provide an improved positioning device and a method of operating said device.

Accordingly, the invention seeks to preferably mitigate, alleviate or eliminate one or more of the disadvantages mentioned above singly or in any combination.

According to a first aspect of the present invention there is provided a method of operating a positioning device using assistance data from a cellular communications network to calculate the position of said device. The method comprises receiving and storing assistance data from the cellular communications network and calculating position of said device using the assistance data and pseudo-range values for a number of tracked positioning satellites. Once the position is calculated the number of the positioning satellites to be tracked is reduced to one or two satellites. Said tracking comprises monitoring time of arrival of signals from said one or two positioning satellites. If calculating the position of the device is requested then an estimated accurate time is calculated based on the monitored time of arrival of the signals from said one or two positioning satellites, the stored assistance data and last known location. In the next step time of arrival of signals from at least two additional positioning satellites is estimated using the stored assistance data and the estimated accurate time. In the following step, pseudo-ranges for the one or two positioning satellites and the at least two additional positioning satellites are obtained and finally the position of the device is calculated.

According to a second aspect of the present invention, there is provided a positioning device comprising a cellular communications section adapted to receive assistance data from a cellular communications network and a positioning section adapted to receive signals from a number of positioning satellites. The positioning device further comprises a memory and a clock adapted to provide timing to said device. Said positioning device is adapted to calculate its position using the assistance data and pseudo-range values for a number of positioning satellites and to reconfigure part of functional blocks of said positioning section to reduce the number of tracked positioning satellites to one or two between requests to calculate location. The positioning device is further adapted to calculate estimated accurate time for each request to calculate position.

According to a third aspect of the present invention there is provided a method of operating a positioning device using assistance data from a cellular communications network to calculate the position of said device. The method comprises receiving and storing assistance data from the cellular communications network, calculating position of said device using the assistance data and pseudo-range values for a number of tracked positioning satellites. In the following step, the method comprises disabling functional components of a positioning section of the positioning device and then intermittently enabling said functional components, wherein timing of said enabling is linked to timing of monitoring a paging channel by a cellular communications section. If calculating the position of the device is requested, the method comprises calculating estimated accurate time based on the monitored time of arrival of the signals from said positioning satellites, the stored assistance data and last known location; obtaining pseudo-ranges for said number of positioning satellites and calculating position of the device.

According to a fourth aspect of the present invention there is provided a positioning device comprising a cellular communications section adapted to receive assistance data from a cellular communications network and a positioning section adapted to receive signals from a number of positioning satellites. The positioning device also comprises a memory and a clock adapted to provide timing to said device. Said positioning device is adapted to calculate its position using the assistance data and pseudo-range values for a number of positioning satellites. The positioning device is also adapted to disable functional blocks of said positioning section between requests to calculate position and to enable intermittently said functional components between said requests to calculate position, wherein timing of said enabling is linked to timing of monitoring a paging channel by said cellular communications section. The positioning device is further adapted to calculate estimated accurate time for each request to calculate position.

Further features of the present invention are as claimed in the dependent claims.

The present invention provides the benefit of reduced power consumption and CPU usage compared with full tracking with positioning reports. Synchronizing GPS activity with the monitoring of cellular paging channels further reduces power consumption by reducing the time that the CPU and VCXO (Central Processing Unit, Voltage-Controlled Crystal Oscillator) and associated components are awake. The time to fix in the case of tracking only a limited number of the available positioning satellites is also significantly shorter than in the case of solutions which do not track any positioning satellites between fixes.

### Brief description of the drawings

The present invention will be understood and appreciated more fully from the following detailed description taken in conjunction with the drawings in which:
FIG. 1 is a illustration of a GPS positioning system in operation;
FIG. 2 is a flowchart illustrating a method of operating a positioning device in one embodiment of the present invention;
FIG. 2A is a flowchart illustrating a method of operating a positioning device in one embodiment of the present invention;
FIG. 3 is a block diagram illustrating a positioning device in one embodiment of the present invention
FIG. 4 is a flowchart illustrating a method of operating a positioning device in one embodiment of the present invention;
FIG. 5 is a timing diagram illustrating operation of a positioning device in one embodiment of the present invention;
FIG. 6 is a flowchart illustrating a method of operating a positioning device in one embodiment of the present invention;
FIG. 7 is a flowchart illustrating a method of operating a positioning device in one embodiment of the present invention;
FIG. 8 is a flowchart illustrating a method of operating a positioning device in one embodiment of the present invention.

### Detailed description

The present invention is discussed herein below in the context of a GPS positioning system. However, it should be understood that it is not limited to GPS, but instead applies equally to other satellite positioning systems (e.g. Galileo and GLONASS).

The term "positioning device" herein below relates to a device that is adapted to determine its own location. It also covers devices whose primary function is not determining location, e.g. mobile phones with GPS modules.

The term "cellular network" herein below relates to a telecommunications network designed to transmit voice and/or data, e.g. GSM, WCDMA, Professional Mobile Radio (e.g. TETRA) as well as to networks primarily designed to transmit data, e.g. WLAN (Wireless Local Area Network).

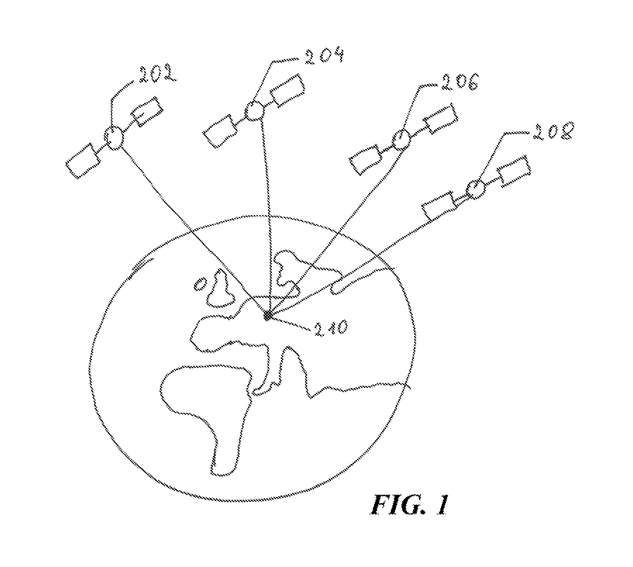

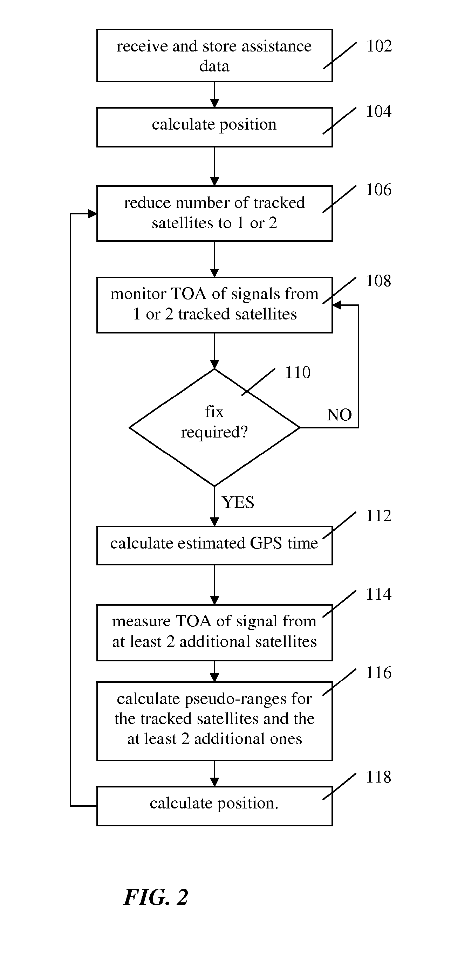

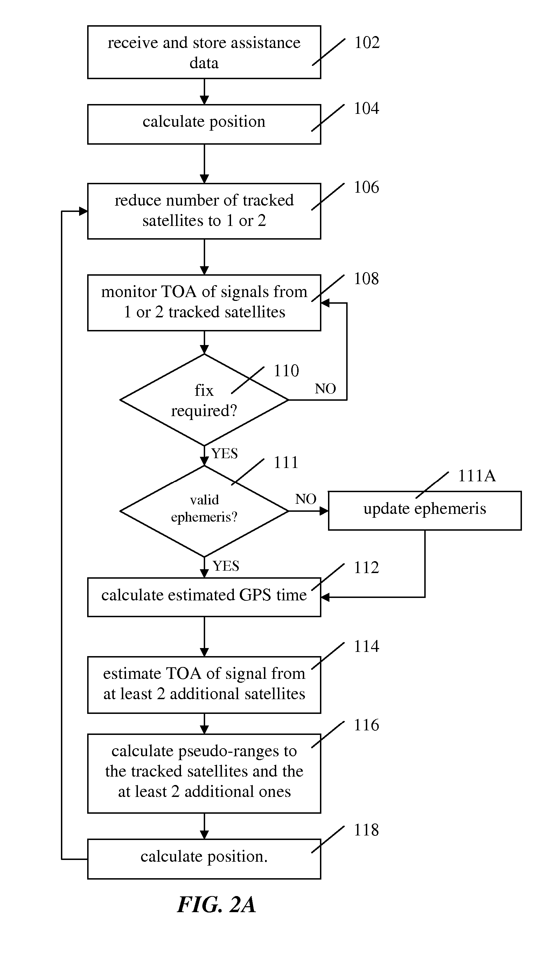

An embodiment of the present invention will be described with reference to Fig. 1 and Fig. 2 which illustrate a method of operating a GPS positioning device using assistance data provided by a cellular communications network. The GPS positioning device receives the assistance data after requesting it from the cellular network and uses said assistance data to calculate its position. The assistance data comprises ephemeris, approximate time and approximate location of the GPS device. Approximate location of the GPS device is determined based on cell ID of the cellular network the device is in. In the GPS system, ephemeris data comprises information on the health of the system and the exact position of the GPS satellites.

In operation, after reception from the cellular communications network the assistance data is stored 102 in a memory of the positioning device and then used in calculating 104 position of the GPS device 210. This calculation is carried out in accordance with techniques known in the art and includes the calculation of pseudo-range values for a number of positioning satellites. It is known that to calculate position 210 pseudo-range values for at least four GPS satellites 202 - 208 have to be known.

In accordance with an embodiment of the present invention, once the fix has been carried out (position calculated) the number of positioning satellites being tracked is reduced 106 to one or two GPS satellites. In one embodiment, in the operation of tracking the reduced number of GPS satellites time of arrival (TOA) of signals from said one or two GPS satellites is monitored 108.

In this state, i.e. tracking only one or two satellites, no attempt is made to calculate the location of the positioning device or to calculate GPS time. This reduces the load on the CPU and associated hardware. Additionally no attempt is made to decode or parse navigation data bits from the GPS satellites. Only the time of arrival or optionally, after calculations, pseudo-range values for one or two positioning satellites are tracked. The tracking is done against an arbitrary time base, for example the one provided by the timing generator of a cellular radio.

To obtain a fix, at least four GPS satellites must be tracked by the GPS receiver and used in the measurements and calculations. Tracking such a large number of GPS satellites consumes power (which is a scarce resource in battery powered portable devices) and processing resources, which could be used for other applications. Therefore reducing the number of tracked GPS satellites saves the battery and frees the processor to perform other tasks.

The GPS positioning device remains in this state until calculation of position is requested 110.

If calculating the position of the GPS device is requested by the user (e.g. when a photograph is made in geotagged mode) or by the network operator (e.g. in the case of emergency call), the GPS time is estimated 112 based on the monitored time of arrival of the signals from said one or two positioning satellites and the stored assistance data and last known location. In this step the accurate time (i.e. GPS time for implementation of the invention in the GPS system) is estimated using fine time assistance and TOA of signals from said one or two tracked satellites. The accuracy of the GPS time estimation (and in consequence the time to fix) depends on the distance moved by the phone since the last fix. The bigger the distance the positioning device travelled the lower the GPS time estimation accuracy. With reduced accuracy of the estimated GPS time the time to fix increases.

It is worth noting that in the subsequent fix the GPS device does not usually request assistance data from the cellular network, but uses ephemeris stored in the memory of the GPS device.

In the next step, time of arrival of signals from at least two additional positioning satellites is measured 114 using the stored assistance data and the estimated accurate time. In order to calculate position it is necessary to use signals from at least four satellites, therefore the total of the number of satellites tracked between fixes and the number of additional satellites must give at least four, i.e. if only one GPS satellite is tracked between fixes at least three additional satellites are needed.

In the next step, pseudo-ranges for the one or two positioning satellites and the additional positioning satellites are obtained 116. Again, calculating pseudo-ranges is carried out in accordance with methods known in the art and is not the subject matter of the present invention. Similarly, final calculations of the position of the device 118 are carried out according to methods known in the art. Preferably, once the position is calculated and reported (e.g. sent to the network operator in the case of an emergency call or saved with the photograph), the GPS device reduces the number of satellites to be tracked until the next fix is requested. In this way a loop is closed in which the GPS device tracks small numbers of GPS satellites during periods between fixes and increases the number of satellites tracked only when a fix is requested.

This method is applicable when interval between reporting GPS measurements is relatively long (e.g. more than thirty seconds). In a preferred embodiment the operations of the GPS section 302 at times between fixes are linked with monitoring of the cellular paging channel by the communications section 304 of the GPS positioning device 300.

By reducing the number of GPS satellites to be tracked between fixes power consumption is significantly reduced. However, in a preferred embodiment the power consumption is reduced even further. In a preferred embodiment tracking of said one or two GPS satellites is not carried out continuously, but there are periods when the signals are not monitored and periods when the positioning device 300 monitors the TOA of signals from said one or two GPS satellites. Operation of the positioning section 302 of the device is linked with operation of the cellular section 304. In this embodiment the tracking is performed intermittently, substantially at same times as monitoring of the cellular paging channel, which is carried out by the cellular communication section 304 of the GPS positioning device 300. As described below this minimises the time for which the VCXO 303, CPU and associated circuits needs to be active.

Synchronising background activities within the cellular section 304 to the paging cycle is desirable. When a mobile phone is on it must be possible to receive incoming mobile terminated calls. It is also necessary to track the availability of cells so that the best cell is chosen for service. Mobile phones detect incoming calls by monitoring a paging channel. Messages on the paging channel tell the mobile phone when it needs to establish a connection with the network to receive an incoming call. There are many mobile telephones that monitor the same paging channel. These mobile phones are divided into paging groups. The paging messages for a specific group are transmitted at specific times on an interval that reoccurs every few seconds. This allows the mobile phone to power down many of its hardware blocks at times when its paging group is not being addressed. Since battery life is very important for mobile devices as many hardware components as possible are turned off between paging intervals. The VCXO is one of these components. The process for turning on the VCXO and other hardware blocks is not instantaneous. To maximise battery life the blocks must be powered up as few times as possible.

In a further preferred embodiment, tracking of said one or two satellites is timed to occur following corrections to frequency and timing references made by the cellular receiver section. In one embodiment the cellular section uses two clocks: a VCXO 303 and a low power, low accuracy 32 kHz clock. The 32 kHz clock is turned on all the time whereas the VCXO has a higher power consumption than the 32 kHz clock and is only activated when needed. There are other clock technologies that can be used instead of a VCXO called a TCXO (temperature controlled crystal oscillator) and an OCXO (oven-controlled crystal oscillator). These are more accurate but are also more expensive. To compensate for the inaccuracy of the VCXO a process called frequency correction is implemented. When a cellular radio signal is received an estimate is made of the frequency error of the VCXO. This error is then corrected by adjusting the frequency of the VCXO.

It has been mentioned that frequency corrections are made when paging signals are received from the cellular network. There are also timing corrections, to the time base in TIMGEN that are made at that time. The low accuracy of the 32 kHz clock means that the cellular time base in the phone TIMGEN (timing generator) 308 will drift when the VCXO 303 is off between paging intervals. This is compensated for by timing corrections made based on the received signals from the network.

Linking operations of the positioning section 302 to monitoring of the paging channel by the cellular section 304 has the following advantages:
- the time base used by the equipment has an improved accuracy because it is corrected against the timing reference used by the cellular base station;
- the frequency reference used by the equipment has an improved accuracy because it has been corrected against the frequency reference of the cellular base station;
- power consumption of the device is reduced by maximising the time that the CPU and it's associated circuitry may be turned off.

In one embodiment, in the steps of monitoring time of arrival of signals the timing of received GPS signals is stored using the cellular time base as a reference. This information is later used to obtain estimated GPS time.

According to embodiments of the present invention the assistance data is requested once when the positioning device starts-up and for further fixes only ephemeris stored in memory of the positioning device 300 is used. This means that assistance data is requested only for the first fix and the subsequent fixes usually use stored ephemeris data and new assistance data is not normally requested.

In a preferred embodiment of the present invention, illustrated in Fig. 2A, validity of the stored ephemeris is checked 111. If the ephemeris is not valid an update is requested 111A. Two examples of criteria for updating ephemeris are given below. If the number of positioning satellites above horizon (i.e. visible to the GPS positioning device), for which ephemeris is stored in said positioning device, is less then five, then updated ephemeris is requested.

Preferably, new ephemeris data is requested from the cellular communications network if the TOE (time of ephemeris) of the stored ephemeris is more than two hours old. Ephemeris data in GPS system contains precise position of the GPS satellites and is generally valid for a maximum of four hours. Therefore the positioning device should request new ephemeris before the one stored is too old. However, periods different from the four hours can also be used.

In general, the criteria for requesting new ephemeris are chosen such that new ephemeris is requested before the stored data is unusable.

In a preferred embodiment the assistance data would typically be acquired using an "MO-LR Semi-autonomous Self Location" procedure as referred to in the 3GPP specification 22.071. In the case of subsequent fixes only ephemeris and possibly Almanac would be needed since time and approximate location are already available. The assistance data could also be acquired via the internet using a SUPL (Secure User Plane Location) protocol. It is also possible to get ephemeris using techniques called "long term orbits" where communication with the network is only required once per day. In preferred embodiments the assistance data is delivered by a cellular network even if obtained from resources outside the cellular network.

Like reference numerals have been given to like steps throughout all the figures.

In a preferred embodiment the satellite(s) to be tracked between fixes is/are selected based on the strengths of the received signals from a number of positioning satellites.

Also preferably, the process of selecting said satellite to be tracked between fixes is based on estimated times till a number of positioning satellite pass over a horizon.

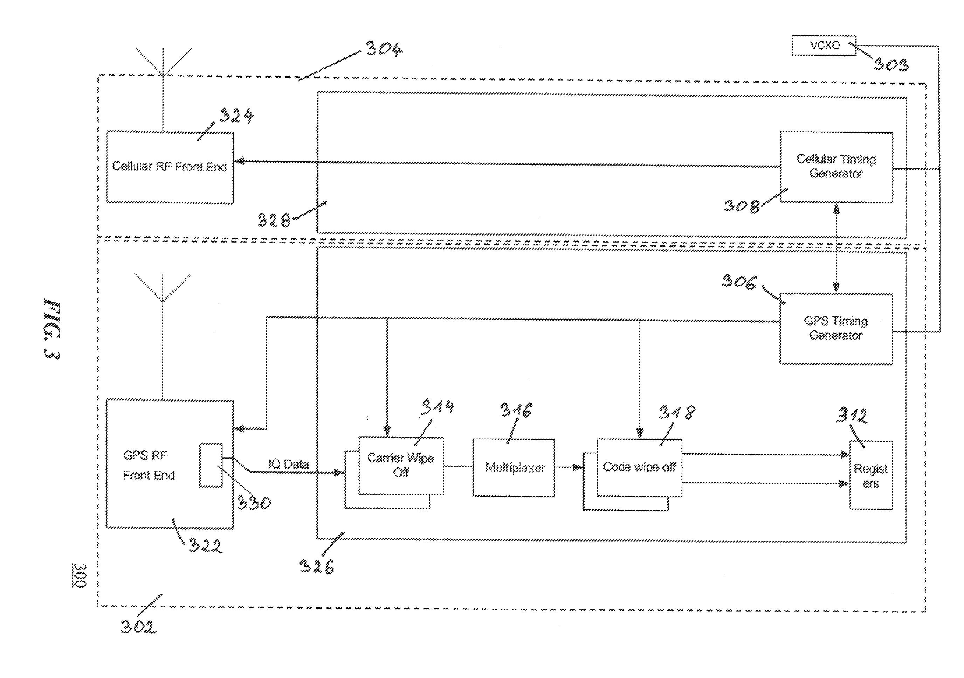

In one embodiment of the present invention, illustrated in Fig. 3 a GPS positioning device 300 is disclosed. For the sake of clarity the drawing presents the embodiment of the invention in a very schematic way with elements and lines not essential for understanding the invention omitted.

The device 300 comprises a cellular communications section 304 and a positioning section 302. The cellular communications section comprises a cellular RF (radio frequency) front end 324 for receiving, amongst other, assistance data from the cellular communications network. The positioning section 302 is adapted to receive signals from a number of GPS positioning satellites 202 - 208 and to calculate position 210 of the device using the assistance data and pseudo-range values for a number of positioning satellites 202 - 208 as illustrated in Fig. 1. Because the assistance data (i.e. ephemeris) is used by the device for each requested fix the device 300 further comprises a memory 312 in which the assistance data is stored. The device also comprises a clock 303 adapted to provide timing to said device 300. In one embodiment the clock is a VCXO. In the embodiment illustrated in Fig. 3 the VCXO 303 is connected to the cellular timing generator 308 and to the GPS timing generator 306. However it is within contemplation of the present invention that the VCXO 303 can be connected and provide timing signal also to other components of the positioning device 300. The positioning device also comprises a processor for controlling the cellular communication section 304 and the positioning section 302.

The positioning section 302 is adapted to reconfigure part of its functional blocks, i.e. GPS RF front end 322, carrier wipe-off blocks 314 and code wipe-off blocks 318, to reduce the number of tracked GPS positioning satellites to one or two between requests to calculate location. Once the positioning device 300 receives request to calculate position the device 300 is adapted to calculate estimated GPS time. In one embodiment the calculation of the estimated GPS time can be carried out by the positioning section 302 or alternatively in another part of the positioning device 300. This means that the GPS time is not maintained or calculated continuously within the device 300, but is estimated individually for each request to fix position. Similarly calculation of position and other calculations can be carried out in one embodiment in the positioning section or, alternatively these can be carried out in another part of the positioning device 300.

In one embodiment, all the functional blocks mentioned earlier, GPS RF front-end 322, carrier wipe-off blocks 314 and code wipe-off blocks 318, are implemented as hardware components (or hardware blocks). In an alternative embodiment the GPS front-end 322 is implemented as hardware block and at least the carrier wipe-off blocks 314 or the code wipe-off blocks 318 are implemented in software (software blocks).

In one embodiment, the reconfiguration of the GPS functional blocks comprises disabling part of the functional blocks.

In an alternative embodiment the reconfiguration of the GPS functional blocks comprises arranging said functional blocks in such a way that at least part of the functional blocks (carrier wipe-off blocks 314 and code wipe-off blocks 318) that were freed after reducing the number of tracked satellites are configured to be used for tracking said one or two GPS satellites. This embodiment is more efficient than the one in which some of the blocks are disabled because it speeds up the process. In yet another embodiment all carrier wipe-off blocks 314 and code wipe-off blocks 318 in the positioning section 302 are used for tracking said one or two GPS satellites.

The positioning section 302 also comprises a plurality of carrier wipe-off blocks 314. Said positioning section 302 enables a first number of carrier wipe-off blocks 314 to track said one or two GPS satellites while keeping disabled remaining wipe-off blocks 314 between requests to calculate location. The positioning section 302 further comprises a plurality of code wipe-off blocks 318 and enables a second number of code wipe-off blocks 318 to track said one or two positioning satellites and disables remaining code wipe-off blocks 318 between requests to calculate location. In one embodiment the first number is equal to the second number, but these may be different in alternative embodiments.

By reducing the number of functional blocks (GPS RF front end 322, code wipe-off blocks 318 and carrier wipe-off blocks 314) that are enabled between fixes in order to track one or two GPS satellites the positioning section 302 reduces consumed power.

In alternative embodiments, rather then disabling the carrier wipe-off blocks 314 and the code wipe-off blocks 318 it is possible to use them in the process of tracking said one or two GPS satellites in order to speed up the process.

In operation, the incoming IQ data (In-phase and Quadrature components of the GPS incoming signal) is passed first from the GPS RF front end 322 to the carrier wipe-off blocks 314. In one embodiment, the GPS RF front-end 322 is an analogue component comprising an analogue-to-digital converter 330 and this analogue-to-digital converter 330 sends the IQ data stream to the carrier wipe-off blocks 314. The carrier wipe-off block 314 consists of M sub-blocks each of which contains a digitally controlled oscillator (DCO). The signal from the DCO is mixed with the incoming I and Q data to remove the carrier. A plurality of these carrier wipe-off blocks 314 are required because the different GPS satellites are experiencing different Doppler effect (frequency shift) and because it is desirable to search more than one frequency bin at a time, where a frequency bin is one candidate frequency of many used when searching for a signal over a range of frequencies.

In an alternative embodiment, the analogue-to-digital converter is implemented between the GPS RF front-end 322 and the carrier wipe-off blocks 314.

Incoming signal transmitted by the GPS satellites comprises a C/A code (Coarse/Acquisition code), which is unique for each GPS satellite and is used for identification of the sender (i.e. the transmitting GPS satellite) and the device according to one embodiment of the present invention monitors time of arrival of signals from a GPS satellite by monitoring time of arrival of C/A code. The C/A code is a 1023 chip sequence generated at 1.023 MHz and repeats every 1ms. The code wipe-off block 318 removes the C/A code from the incoming signal. In order to remove the C/A code from the incoming signal the code wipe-off block 318 generates a replica of the C/A code of the targeted satellite, based on the rough estimate from the acquisition stage. The receiver 302 tries to match the replica code with the incoming code along with any change caused by Doppler effect (frequency shift caused by relative motion between the GPS satellite and the positioning device 300). The code generation uses a DCO as in the prior art but in addition the timing offset (slew) is determined by the GPS timing generator 306 so that the C/A generation may be turned off when not in use thus saving power.

In a preferred embodiment when the positioning section 302 monitors the time of arrival of signals from the GPS satellite said positioning section 302 monitors the time of arrival of C/A codes and stores it against the cellular time base provided by cellular timing generator 308.

In one embodiment, the GPS timing generator 306 incorporates a timer that rolls over at a period equivalent to the length of one Navigation data bit (i.e. at a period of just over 20ms, i.e. 20 C/A codes) and the resolution of the timer is set to a value in the order of 10ns i.e. one hundredth of the C/A bit length. The timer is used to accurately control the time when the GPS front-end 322 and the carrier wipe-off circuits 318 are enabled, so as to minimize power consumption and to fine tune the timing of the code wipe-off circuits 314 and to link these with the monitoring of the paging channel by the cellular section 304. The cellular communication section 304 comprises a cellular timing generator 308 providing a time base of a cellular communications network to a positioning timing generator 306 of the positioning section 302. This allows precise control of the timing of monitoring of TOA of the C/A codes by the GPS timing generator 306. The fact that this operation of monitoring of TOA of the C/A codes is performed periodically and not continuously allows for further saving of battery power.

In one embodiment, the GPS timing generator 306 enables tracking of one or two satellites substantially at same times as monitoring cellular paging channel by a cellular communication section 304 of the positioning device 300. In practice, it means that every few seconds the time of arrival of C/A codes is monitored for a fraction of a second and then after another few seconds the cycle repeats. Synchronization of the monitoring of GPS signals with monitoring of the paging channel does not have to be precise. The reason for this synchronisation is saving power by avoiding separate powering-up components of both positioning 302 and cellular 304 sections.

Also in a preferred embodiment the GPS timing generator 306 enables monitoring of the GPS signals from said one or two satellites to occur following corrections to frequency and timing references made by the cellular receiver section 304.

In operation the GPS timing generator 306 is connected to said plurality of carrier wipe-off blocks 314, to said plurality of said code-wipe-off blocks 318 and to the GPS RF front end 322. In a preferred embodiment, the GPS timing generator 306 disables said GPS RF front-end 322, carrier wipe-off blocks 314 and code wipe-off blocks 318 used to process signals from said one or two GPS satellites substantially between periods of monitoring cellular paging channel, which reduces power consumption. However in alternative embodiments it is also possible to disable only some of them, e.g. only the GPS front-end 322 or code wipe-off blocks, or any combination of the functional blocks 322, 314 and 318.

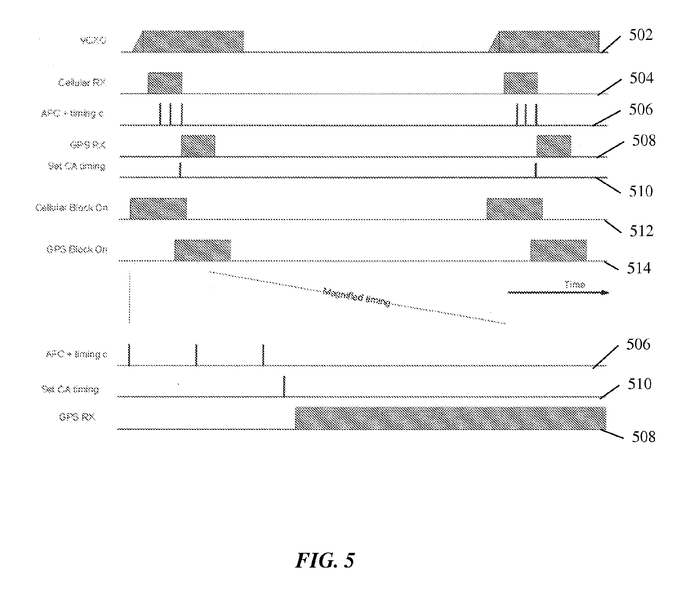

In one embodiment, the GPS timing generator 306 disables said functional blocks 322, 314 and 318 between periods of monitoring cellular paging channel. However, in alternative embodiments there is some time shift, e.g. as illustrated in Fig. 5, rows 504 and 508. In this embodiment the GPS section waits until reference frequency and timing corrections are applied in the cellular section.

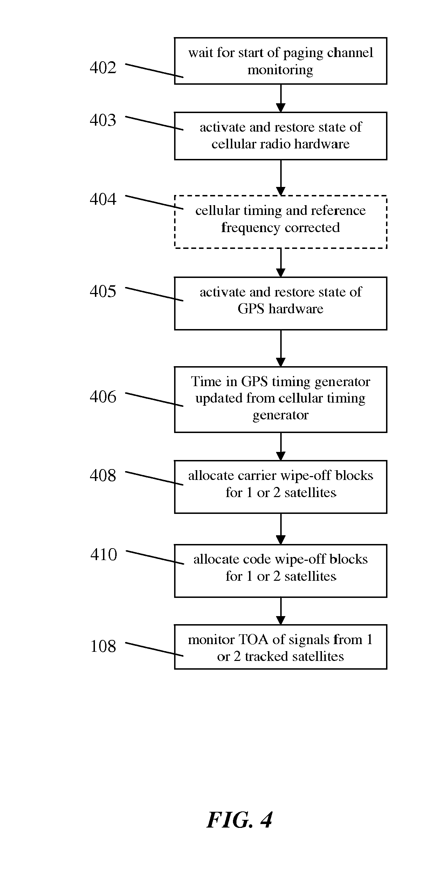

With the components and their functions discussed further details of the embodiments of the method will now be described with reference to Fig. 4. The GPS back-end 326 at times when one or two satellites are tracked has to wait for start of monitoring of a paging channel 402. In the next step the hardware components of the cellular radio are activated and their last state is restored 403. In a preferred embodiment when the cellular radio 304 is activated then corrections to the frequency and timing references are applied 404, by the communication back-end 328. The paging channel is read by the communications section 304 every few seconds and it is used for mobile terminated calls. Linking tracking of GPS satellites, which is carried out intermittently, with monitoring of a paging channel of a wireless communications network (cellular network) has the following benefits:
- Because the communication section 304 has to wake up to monitor the paging channel it is desirable to synchronize carrying out GPS measurements with monitoring of the paging channel so that the communication section 304 can sleep as much as possible. The longer the period of inactivity is, the lower power consumption and longer battery lifetime.
- Voltage controlled crystal oscillator (VCXO) 303 of the communication section 304 is corrected against the network timing when the paging channel has been read and will therefore be more accurate.
- The cellular communication section 304 will synchronise its time base against the network while reading the paging channel. This means that an accurate time reference is available and can be used by the GPS timing generator 306.

In step 405 hardware components of the GPS section 302 are activated and their last state is restored. Following step 405 time in the GPS timing generator 306 is updated 406 from the cellular timing generator 308. In a preferred embodiment at least three carrier wipe-off blocks 314 are allocated 408 per channel (i.e. per GPS satellite) so that multiple frequency bins may be checked. Also preferably at least three code wipe of blocks 318 are allocated 410 per signal from the carrier wipe-off block 314 received via the multiplexer 316. In an alternative embodiments the number of carrier and code wipe-off blocks may be different (preferably higher, but also smaller) than three.

In one embodiment the allocation of carrier wipe-off blocks 314 and code wipe-off blocks 318 is performed every time the time of arrival of C/A codes is monitored. In an alternative embodiment the carrier wipe-off blocks 314 and code wipe-off blocks 318 are allocated once and identifiers of the allocated blocks 314 and 318 are stored in a register. When the positioning section is woken up to monitor the time of arrival of the C/A codes the identifiers of the blocks 314 and 318 to be used for this monitoring are read from the register.

In the next step, once the hardware blocks 322, 314 - 318 are operable the time of arrival of signals (e.g. C/A codes) from said one or two GPS satellites is monitored 108.

The embodiment illustrated in Fig. 4 is one of several possible alternatives. In one of these alternative embodiments monitoring of the TOA of signals from the GPS satellites by the positioning section is timed independently of monitoring of the paging channel by the cellular section 304.

The first three rows 502 - 506 show a sequence of activating cellular modules (i.e. activating VCXO 303 and receiving data by the cellular section) and operations of frequency correction (AFC) and timing correction carried out in the cellular section. The three peaks on AFC timing line 506 shows that in this embodiment the corrections are done multiple times. The next two rows 508 and 510 show the timing of the reception of GPS data 508 and a point when timing is set for the local C/A code generators 510. Rows 512 and 514 illustrate the relative timing of powering-up of the cellular and GPS sections. Rows 502 - 514 use the same time scale. Magnified timing of rows 506 - 510 depicts the relative timing of frequency and timing corrections and reception of GPS data by the GPS section as well as the point when timing is set for the local C/A code generators. In a preferred embodiment GPS RX happens after the Cellular RX so that all the corrections happen before the GPS RX.

The method and the device in accordance with the invention as described in the above embodiments will operate whether one satellite is selected for tracking between fixes or two satellites are tracked.

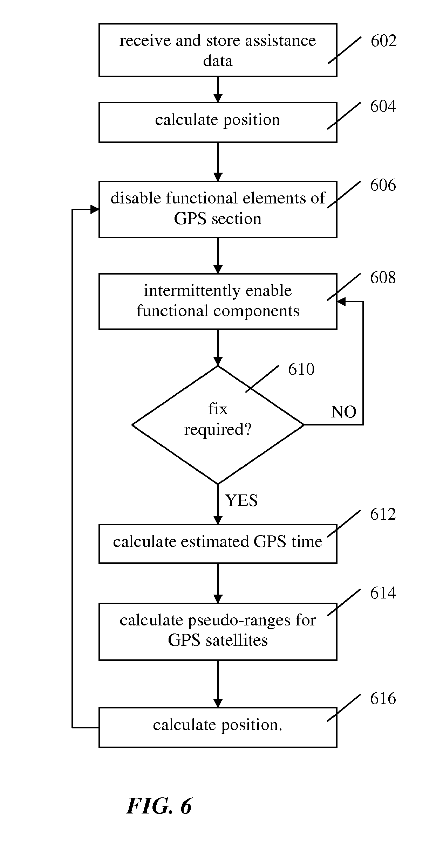

In yet another embodiment, illustrated in Fig. 6, the method of operating a GPS positioning device comprises turning off functional components of the positioning section 302 between requests to calculate position and enabling said functional components intermittently between fixes. The functional components of the positioning section are enabled to track a number of satellites by monitoring the time of arrival of signals from said number of positioning satellites. This method operates regardless of the number of satellites for which the time of arrival of signals is monitored. In a preferred embodiment the number of satellites for which the time of arrival of signals is intermittently monitored is not reduced compared to the number of satellites required to carry out a fix.

In operation, as illustrated in Fig. 6 the GPS positioning device receives 602 the assistance data after requesting it from the cellular network and uses said assistance data to calculate its position. After receiving from the cellular communications network the assistance data is stored 602 in a memory of the positioning device and then used in calculating 604 position of the GPS device 210. This calculation is carried out in accordance with techniques known in the art and includes calculating of pseudo-range values for a number of positioning satellites. It is known that to calculate position 210 pseudo-range values for at least four GPS satellites 202 - 208 have to be known.

In accordance with an embodiment of the present invention once the fix has been carried out (i.e. position calculated) functional components of a positioning section of the positioning device are disabled 606. This results in shutting down most circuitry of the GPS section 302 of the GPS device 300. This, in turn, reduces power consumed by the positioning device 300.

At times between requests to calculate position the method comprises enabling 608 said functional components intermittently wherein the timing of said enabling is linked to the timing of monitoring a paging channel by a cellular communications section. In this state no attempt is made to calculate the location of the positioning device or to calculate GPS time. This reduces the load on the CPU and associated hardware. In one embodiment when the functional components are enabled they monitor the time of arrival of signals from said number of positioning satellites. Additionally no attempt is made to decode or parse navigation data bits from the GPS satellites. Only the time of arrival or optionally, after calculations, pseudo-range values for the number of positioning satellites are tracked. The tracking is done against an arbitrary time base for example the one provided by timing generator of a cellular radio.

The GPS positioning device remains in this state until calculation of position is requested 610.

If calculating the position of the GPS device is requested by the user (e.g. when a photograph is made in geotagged mode) or by the network operator (e.g. in the case of emergency call) the GPS time is estimated 612 based on the monitored time of arrival of the signals from said positioning satellites, the stored assistance data and last known location. In this step the accurate time (i.e. GPS time for implementation of the invention in the GPS system) is estimated using fine time assistance and TOA of signals from said GPS satellites.

It is worth to note that in the subsequent fix the GPS device does not usually request assistance data from the cellular network, but uses ephemeris stored in the memory of the GPS device.

In the next step, pseudo-ranges for said number of positioning satellites are obtained 614. Again, calculating pseudo-ranges is carried out in accordance with methods known in the art and is not subject matter of the present invention. Similarly, final calculations of the position of the device 616 are carried out according to methods known in the art. Preferably, once the position is calculated and reported (e.g. sent to the network operator in the case of an emergency call or saved with the photograph) the GPS device disables 606 functional elements of GPS section until next fix is requested.

In a preferred embodiment the intermittent monitoring of the TOA of signals from said number of GPS satellites is performed substantially at the same times as the monitoring of the cellular paging channel, which is carried out by the cellular communication section 304 of the GPS positioning device 300. As was described earlier this minimises the time for which the VCXO 303, CPU and associated circuits needs to be active.

In a further preferred embodiment tracking of said number of GPS satellites is timed to occur following corrections to frequency and timing references made by the cellular communication section as is illustrated in Fig. 5, rows 506 and 508. In one embodiment the cellular section uses two clocks: a VCXO 303 and a low power, low accuracy 32 kHz clock. The 32 kHz clock is turned on all the time whereas the VCXO has higher power consumption than the 32 kHz clock and is only activated when needed. There are other clock technologies that can be used instead of a VCXO called a TCXO (temperature controlled crystal oscillator) and an OCXO (oven-controlled crystal oscillator). These are more accurate but are also more expensive. To compensate for the inaccuracy of the VCXO a process called frequency correction is implemented. When a cellular radio signal is received an estimate is made of the frequency error of the VCXO. This error is then corrected by adjusting the frequency of the VCXO.

It has been mentioned that frequency corrections are made when paging signals are received from the cellular network. There are also timing corrections, to the time base in TIMGEN that are made at that time. The low accuracy of the 32 kHz clock means that the cellular time base in the phone TIMGEN (timing generator) 308 will drift when the VCXO 303 is off between paging intervals. This is compensated for by timing corrections made based on the received signals from the network.

According to embodiments of the present invention the assistance data is requested once when the positioning device starts-up and for further fixes only ephemeris stored in memory of the positioning device 300 is used. This means that assistance data is requested only for the first fix and the subsequent fixes usually use stored ephemeris data and new assistance data is not normally requested.

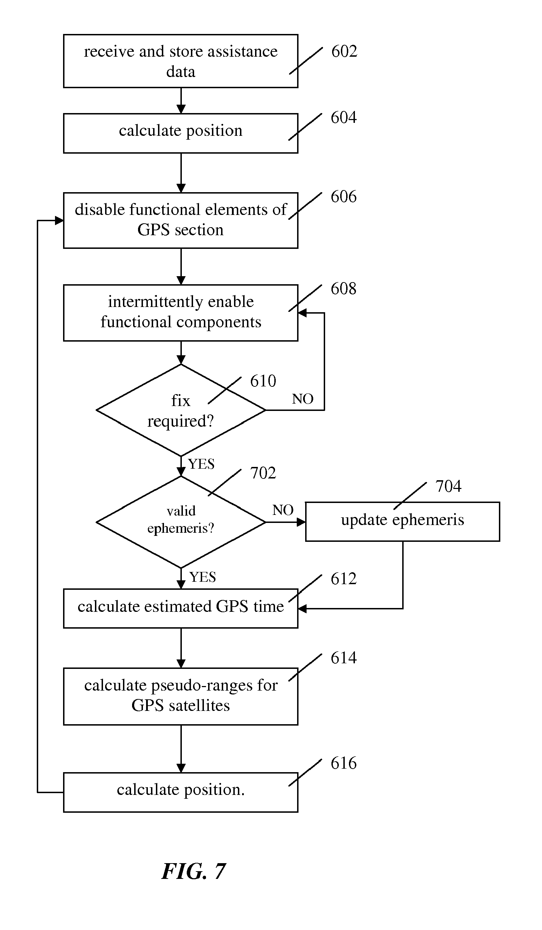

In a preferred embodiment of the present invention, illustrated in Fig. 7, validity of the stored ephemeris is checked 702. If the ephemeris is not valid an update is requested 704. Two examples of criteria for updating ephemeris are given below. If the number of positioning satellites above horizon (i.e. visible to the GPS positioning device), for which ephemeris is stored in said positioning device, is less then five, then updated ephemeris is requested.

Preferably, new ephemeris data is requested from the cellular communications network if the TOE (time of ephemeris) of the stored ephemeris is more than two hours old. Ephemeris data in GPS system contains precise position of the GPS satellites and is generally valid for a maximum of four hours. Therefore the positioning device should request new ephemeris before the one stored is too old. However, periods different from the four hours can also be used.

In general, the criteria for requesting new ephemeris are chosen such that new ephemeris is requested before the stored data is unusable.

In a preferred embodiment the satellite(s) to be tracked between fixes is/are selected based on strengths of the received signals from a number of positioning satellites.

Also preferably, the process of selecting said satellite to be tracked between fixes is based on estimated times till a number of positioning satellite pass over a horizon.

In one embodiment the device 300 comprises a cellular communications section 304 and a positioning section 302. The cellular communications section comprises a cellular RF (radio frequency) front end 324 for receiving, amongst other, assistance data from the cellular communications network. The positioning section 302 is adapted to receive signals from a number of GPS positioning satellites 202 - 208 and to calculate position 210 of the device using the assistance data and pseudo-range values for a number of positioning satellites 202 - 208 as illustrated in Fig. 1. Because the assistance data (i.e. ephemeris) is used by the device for each requested fix the device 300 further comprises a memory 312 in which the assistance data is stored. The device also comprises a clock 303 adapted to provide timing to said device 300. In one embodiment the clock is a VCXO. In the embodiment illustrated in Fig. 3 VCXO 303 is connected to the cellular timing generator 308 and to the GPS timing generator 306. However it is within contemplation of the present invention that the VCXO 303 can be connected and provide timing signal also to other components of the positioning device 300. The positioning device also comprises a processor for controlling the cellular communication section 304 and the positioning section 302.

The positioning device 300 is adapted to disable functional blocks of the positioning section 302, e.g. GPS RF front end 322, carrier wipe-off blocks 314 and code wipe-off blocks 318 as well as, in alternative embodiments, also other components between requests to calculate position. In one embodiment the whole GPS positioning section 302 is disabled between said requests to calculate position. The positioning section 302 is adapted to disable its functional blocks, i.e. GPS RF front end 322, carrier wipe-off blocks 314 and code wipe-off blocks 318 between requests to calculate position. The positioning section 602 is also adapted to enable said functional blocks intermittently between said requests to calculate position, wherein timing of said enabling is linked to timing of monitoring a paging channel by said cellular communications section. Once the positioning device 300 receives a request to calculate position the device 300 is adapted to calculate estimated GPS time. This means that the GPS time is not maintained or calculated continuously within the device 300, but is estimated individually for each request to fix position.

In one embodiment all the functional blocks mentioned earlier, GPS RF front-end 322, carrier wipe-off blocks 314 and code wipe-off blocks 318, are implemented as hardware components (or hardware blocks). In an alternative embodiment the GPS front-end 322 is implemented as hardware block and the carrier wipe-off blocks 314 and code wipe-off blocks 318 are implemented in software (software blocks).

Operation of the functional blocks 322, 314 and 318 was described earlier and is also applicable to this embodiment.

In one embodiment the GPS timing generator 306 incorporates a timer that rolls over at a period equivalent to the length of one Navigation data bit (i.e. at a period of just over 20ms, i.e. 20 C/A codes) and the resolution of the timer is set to a value in the order of 10ns i.e. one hundredth of the C/A bit length. The timer is used to accurately control the time when the GPS front-end 322 and the carrier wipe-off circuits 318 are enabled, so as to minimize power consumption and to fine tune the timing of the code wipe-off circuits 314 and to synchronize these with the monitoring of the paging channel by the cellular section 304. The cellular communication section 304 comprises a cellular timing generator 308 providing a time base of a cellular communications network to a positioning timing generator 306 of the positioning section 302. This allows precise control of the timing of monitoring of TOA of the C/A codes by the GPS timing generator 306.

In one embodiment the GPS timing generator 306 enables monitoring TOA of signals from a number of GPS satellites substantially at same times as monitoring cellular paging channel by a cellular communication section 304 of the positioning device 300. In practice, it means that every few seconds the time of arrival of C/A codes is monitored for a fraction of a second and then after another few seconds the cycle repeats. Synchronization of the monitoring of GPS signals with the monitoring of the paging channel does not have to be precise. The reason for this synchronisation is saving power by avoiding separate powering-up components of both positioning 302 and cellular 304 sections.

Also in a preferred embodiment the GPS timing generator 306 enables the monitoring of the GPS signals from said number of GPS satellites to occur following corrections to frequency and timing references made by the cellular communication section 304.

In operation the GPS timing generator 306 is connected to said plurality of carrier wipe-off blocks 314, to said plurality of said code-wipe-off blocks 318 and to the GPS RF front end 322. In a preferred embodiment the GPS timing generator 306 disables said GPS RF front-end 322, carrier wipe-off blocks 314 and code wipe-off blocks 318 used to process signals from said number of GPS satellites substantially between periods of monitoring cellular paging channel, which reduces power consumption.

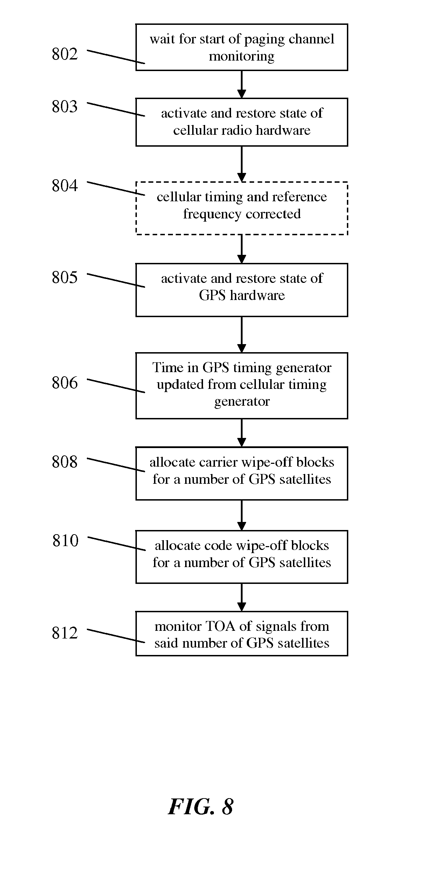

With the components and their functions discussed further details of the embodiments of the method will now be described with reference to Fig. 8. The GPS back-end 326 at times between fixes has to wait for start of monitoring of a paging channel 802. In the next step the hardware components of the cellular radio are activated and their last state is restored 803. In a preferred embodiment when the cellular radio 304 is activated then corrections to the frequency and timing references are applied 804, by the communication back-end 328. The paging channel is read by the communications section 304 every few seconds and it is used for mobile terminated calls.

In step 805 hardware components of the GPS section 302 are activated and their last state is restored. Following step 805 time in the GPS timing generator 306 is updated 806 from the cellular timing generator 308. In a preferred embodiment at least three carrier wipe-off blocks 314 are allocated 808 per channel (i.e. per GPS satellite) so that multiple frequency bins may be checked. Also preferably at least three code wipe of blocks 318 are allocated 810 per signal from the carrier wipe-off block 314 received via the multiplexer 316. In an alternative embodiments the number of carrier and code wipe-off blocks may be different (preferably higher, but also smaller) than three.

In one embodiment the allocation of carrier wipe-off blocks 314 and code wipe-off blocks 318 is performed every time the time of arrival of C/A codes is monitored. In an alternative embodiment the carrier wipe-off blocks 314 and code wipe-off blocks 318 are allocated once and identifiers of the allocated blocks 314 and 318 are stored in a register 312. When the positioning section is woken up to monitor the time of arrival of the C/A codes the identifiers of the blocks 314 and 318 to be used for monitoring are read from the register.

In the next step, once the hardware blocks 322, 314 - 318 are operable the time of arrival of signals (e.g. C/A codes) from said number of GPS satellites is monitored 812.

The embodiment illustrated in Fig. 8 is one of several possible alternatives. In one of these alternative embodiments monitoring of the TOA of signals from the GPS satellites by the positioning section is timed independently of monitoring of the paging channel by the cellular section 304.

## Claims

1. A method of operating a positioning device using assistance data from a cellular communications network to calculate the position of said device, the method comprising:
a) receiving and storing (102) assistance data from the cellular communications network;
b) calculating (104) position of said device using the assistance data and pseudo-range values for a number of tracked positioning satellites;
c) reducing (106) the number of the positioning satellites to be tracked to one or two satellites, wherein said tracking comprises monitoring (108) time of arrival of signals from said one or two positioning satellites;
d) if calculating the position of the device is requested (110), calculating (112) estimated accurate time based on the monitored time of arrival of the signals from said one or two positioning satellites, the stored assistance data and last known location;
e) measuring (114) time of arrival of signals from at least two additional positioning satellites using the stored assistance data and the estimated accurate time;
f) obtaining (116) pseudo-ranges for the one or two positioning satellites and the at least two additional positioning satellites;
g) calculating (118) position of the device.

2. The method according to claim 1, wherein said tracking of said one or two satellites is carried out intermittently substantially at same times as monitoring cellular paging channel (402, 405) by a cellular communication section of the positioning device.

3. The method according to claim 1or claim 2 wherein said tracking of said one or two satellites is timed to occur following corrections (404) to frequency and timing references made by the cellular communication section.

4. The method according to any one of preceding claims, wherein said assistance data comprises ephemeris, approximate time and approximate location of the device.

5. The method according to any one of preceding claims comprising requesting additional ephemeris from the cellular communications network if the number of positioning satellites above horizon, for which ephemeris is stored in said positioning device, is below a predefined value.

6. The method according to any one of preceding claims comprising requesting updated ephemeris from the cellular communications network if the age of the ephemeris stored in said positioning device is greater then a predefined value and/or said stored ephemeris does not contain data about visible satellites.

7. The method according to any one of preceding claims, wherein the selection of said one or two satellites to be tracked is based on strengths of the received signals from a number of positioning satellites.

8. The method according to any one of preceding claims, wherein the selection of said one or two satellites to be tracked is based on estimated times till a number of positioning satellite pass over a horizon.

9. A positioning device (300) comprising a cellular communications section (304) adapted to receive assistance data from a cellular communications network, a positioning section (302) adapted to receive signals from a number of positioning satellites, a memory (312) and a clock (303) adapted to provide timing to said device (300), wherein said positioning device (300) is adapted to calculate its position using the assistance data and pseudo-range values for a number of positioning satellites and to reconfigure part of functional blocks (322, 314, 318) of said positioning section (302) to reduce the number of tracked positioning satellites to one or two between requests to calculate location and the device (300) is further adapted to calculate estimated accurate time for each request to calculate position.

10. The device (300) according to claim 9, wherein the positioning section (302) comprises a plurality of carrier wipe-off blocks (314) and the positioning section (302) is adapted to enable a first number of said carrier wipe-off blocks (314) to track said one or two positioning satellites and disable remaining wipe-off blocks (314) between requests to calculate location.

11. The device (300) according to claim 9 or claim 10, wherein the positioning section (302) comprises a plurality of code wipe-off blocks (318) and the positioning section (302) is adapted to enable a second number of said code wipe-off blocks (318) to track said one or two positioning satellites and disable remaining code wipe-off blocks between requests to calculate location.

12. The device (300) according to any one of claims 9 to 11, wherein the cellular communication section (304) comprises a cellular timing generator (308) adapted to provide a time base of a cellular communications network to a positioning timing generator (306) of the positioning section (302).

13. The device (300) according to claim 12, wherein said positioning timing generator (306) is adapted to enable tracking of said one or two satellites intermittently, substantially at same times as monitoring cellular paging channel by a cellular communication section (304) of the positioning device.

14. The device (300) according to claim 12 or claim 13, wherein said positioning timing generator (306) is adapted to enable tracking of said one or two satellites intermittently and to time said tracking to occur following corrections to frequency and timing references made by the cellular communication section (302).

15. The device (300) according to claim 13 or claim 14, wherein said positioning timing generator (306) is connected to said plurality of carrier wipe-off blocks (314) and is adapted to disable said first number of said carrier wipe-off blocks (314) substantially between periods of monitoring cellular paging channel by the cellular communication section (304).

16. The device (300) according to any one of claims 13 to 15, wherein said positioning timing generator (306) is connected to said plurality of code wipe-off blocks (318) and is adapted to disable said second number of said code wipe-off blocks (318) substantially between periods of monitoring cellular paging channel by the cellular communication section.

17. The device (300) according to claim 13 or claim 14, wherein said positioning timing generator (306) is connected to said plurality of carrier wipe-off blocks (314) and is adapted to disable all of said carrier wipe-off blocks (314) substantially between periods of monitoring cellular paging channel by the cellular communication section (304).

18. The device (300) according to claim 13 or claim 14, or claim 17, wherein said positioning timing generator is connected to said plurality of code wipe-off blocks (318) and is adapted to disable all of said code wipe-off blocks (318) substantially between periods of monitoring cellular paging channel by a cellular communication section (304).

19. The device (300) according to any one of claims 13 to 18, wherein said positioning timing generator is connected to radio frequency positioning front-end (322) and is adapted to disable said radio frequency positioning front-end (322) substantially between periods of monitoring cellular paging channel by a cellular communication section of the positioning device.

20. The device (300) according to any one of claims 11 - 19, wherein the positioning timing generator (306) is adapted to determine a timing offset for generation of a C/A in the code wipe of block (318).

21. A method of operating a positioning device using assistance data from a cellular communications network to calculate the position of said device, the method comprising:
a) receiving (602) and storing assistance data from the cellular communications network;
b) calculating (604) position of said device using the assistance data and pseudo-range values for a number of tracked positioning satellites;
c) disabling (606) functional components of a positioning section of the positioning device;
d) intermittently enabling (608) said functional components, wherein timing of said enabling is linked to timing of monitoring a paging channel by a cellular communications section;
e) if calculating the position of the device is requested (610), calculating (612) estimated accurate time based on the monitored time of arrival of the signals from said positioning satellites, the stored assistance data and last known location;
f) obtaining (614) pseudo-ranges for said number of positioning satellites;
g) calculating (616) position of the device.

22. The method according to claim 21, wherein said intermittent enabling of said functional components is carried out substantially at same times as monitoring cellular paging (802, 805) channel by a cellular communication section of the positioning device.

23. The method according to claim 21 or claim 22 wherein said intermittent enabling of said functional components is timed to occur following corrections (804) to frequency and timing references made by the cellular communication section.

24. The method according to any one of claims 21 to 23, wherein said assistance data comprises ephemeris, approximate time and approximate location of the device.

25. The method according to any one of claims 21 to 24 comprising requesting additional ephemeris from the cellular communications network if the number of positioning satellites above horizon, for which ephemeris is stored in said positioning device, is below a predefined value.

26. The method according to any one of claims 21 to 25 comprising requesting updated ephemeris from the cellular communications network if the age of the ephemeris stored in said positioning device is greater then a predefined value and/or said stored ephemeris does not contain data about visible satellites.

27. The method according to any one of claims 21 to 26, wherein the selection of said number of satellites for monitoring time of arrival of signals from said number of positioning satellites is based on strengths of the received signals from positioning satellites.

28. The method according to any one of claims 21 to 27, wherein the selection of said number of satellites for monitoring time of arrival of signals from said number of positioning satellites is based on estimated times till said positioning satellites pass over a horizon.

29. A positioning device (300) comprising a cellular communications section (304) adapted to receive assistance data from a cellular communications network, a positioning section (302) adapted to receive signals from a number of positioning satellites, a memory (312) and a clock (303) adapted to provide timing to said device (300), wherein said positioning device (300) is adapted to calculate its position using the assistance data and pseudo-range values for a number of positioning satellites and to disable functional blocks (322, 314, 318) of said positioning section (302) between requests to calculate position and to enable intermittently said functional components between said requests to calculate position, wherein timing of said enabling is linked to timing of monitoring a paging channel by said cellular communications section and the device (300) is further adapted to calculate estimated accurate time for each request to calculate position.

30. The device (300) according to claim 29, wherein the positioning section (302) comprises a plurality of carrier wipe-off blocks (314) and the positioning section (302) is adapted to enable intermittently said carrier wipe-off blocks (314) to monitor time of arrival of signals from said number of positioning satellites between requests to calculate location.

31. The device (300) according to claim 29 or claim 30, wherein the positioning section (302) comprises a plurality of code wipe-off blocks (318) and the positioning section (302) is adapted to enable intermittently said code wipe-off blocks (318) to monitor time of arrival of signals from said number of positioning satellites between requests to calculate location.

32. The device (300) according to any one of claims 29 to 31, wherein the cellular communication section (304) comprises a cellular timing generator (308) adapted to provide a time base of a cellular communications network to a positioning timing generator (306) of the positioning section (302).

33. The device (300) according to claim 32, wherein said positioning timing generator (306) is adapted to enable monitoring time of arrival of signals from said number of positioning satellites intermittently, substantially at same times as monitoring cellular paging channel by a cellular communication section (304) of the positioning device.

34. The device (300) according to claim 32 or claim 33, wherein said positioning timing generator (306) is adapted to enable monitoring time of arrival of signals from said number of positioning satellites intermittently and to time said monitoring to occur following corrections to frequency and timing references made by the cellular communication section (304).

35. The device (300) according to claim 33 or claim 34, wherein said positioning timing generator (306) is connected to said plurality of carrier wipe-off blocks (314) and is adapted to disable said carrier wipe-off blocks (314) substantially between periods of monitoring cellular paging channel by the cellular communication section (304).

36. The device (300) according to any one of claims 33 to 35, wherein said positioning timing generator (306) is connected to said plurality of code wipe-off blocks (318) and is adapted to disable said code wipe-off blocks (318) substantially between periods of monitoring cellular paging channel by the cellular communication section (304).

37. The device (300) according to any one of claims 33 to 36, wherein said positioning timing generator (306) is connected to radio frequency positioning front-end (322) and is adapted to disable said radio frequency positioning front-end (322) substantially between periods of monitoring cellular paging channel by a cellular communication section (304) of the positioning device.

38. The device (300) according to any one of claims 32 - 37, wherein the positioning timing generator (306) is adapted to determine a timing offset for generation of a C/A in the code wipe of block (318).
